Europäisches Patentamt

European Patent Office

Office européen des brevets

(11) Veröffentlichungsnummer: **0 348 618 B1**

# EUROPÄISCHE PATENTSCHRIFT

(45) Veröffentlichungstag der Patentschrift: **02.12.92**

(21) Anmeldenummer: **89106966.8**

(22) Anmeldetag: **19.04.89**

(51) Int. Cl.⁵: **B60K 5/00**, B60R 16/04, F02M 35/04

(54) **Haltevorrichtung.**

(30) Priorität: **30.06.88 DE 3822055**

(43) Veröffentlichungstag der Anmeldung:
**03.01.90 Patentblatt 90/01**

(45) Bekanntmachung des Hinweises auf die
Patenterteilung:
**02.12.92 Patentblatt 92/49**

(84) Benannte Vertragsstaaten:
**AT CH DE FR GB IT LI SE**

(56) Entgegenhaltungen:
**EP-A- 0 269 782**
**DE-U- 1 807 288**
**FR-A- 1 030 862**
**GB-A- 846 325**

**PATENT ABSTRACTS OF JAPAN, Band 7, Nr.
183 (M-235)[1328], 12. August 1983; & JP-A-58
85 716 (NISSAN JIDOSHA K.K.) 23-05-1983**

**PATENT ABSTRACTS OF JAPAN, Band 7, Nr.
89 (M-207), 13. April 1983; & JP-A-58 012 850
(NISSAN JIDOSHA K.K.) 25-01-1983**

(73) Patentinhaber: **Dr.Ing.h.c. F. Porsche Aktiengesellschaft
Porschestrasse 42
W-7000 Stuttgart 40(DE)**

(72) Erfinder: **Götz, Peter
Engelbergstrasse 9
W-7255 Rutesheim(DE)**

EP 0 348 618 B1

# Beschreibung

Die Erfindung bezieht sich auf eine Haltevorrichtung für ein Antriebsaggregat sowie von Teilen des Aggregats im Fahrzeugaufbau eines Kraftfahrzeugs.

Aus dem DE-U 18 07 288 ist eine Lagerung für ein Luftfilter einer Brennkraftmaschine bekannt, dessen Gehäuse über zwei Stützen mit einem Maschinenteil verbunden ist, wobei zwischen den Stützen und dem Gehäuse elastische Elemente vorgesehen sind.

Aus der EP-A-0 269 782 ist eine Haltevorrichtung für eine Batterie in einem Kraftfahrzeug mittels einer Aufnahmekonsole bekannt, die sich teilweise an einem Tragarm abstützt, der gleichzeitig zur Aufnahme eines Lagers für ein Aggregat ausgebildet ist. Die Aufnahmekonsole umfasst eine Lagerplatte für die Batterie und ist über Versteifungen aus Blech mit einem Aufbauträger des Fahrzeugs verbunden.

Aufgabe der Erfindung ist es, eine kompakte, in die Fahrzeugaufbaustruktur integrierte Haltevorrichtung mit stabilen Abstütz- und Aufnahmelementen für Teile des Antriebsaggregates sowie für ein Motorlager zu schaffen.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß in einem Eckbereich des Fahrzeugaufbaus, in dem ein Längsträger mit einem Querträger verbunden ist, durch ein kompaktes Bauteil, welches sich an dem Träger abstützt, gleichzeitig über eine Stützkonsole, die mit einer Aufnahmekonsole verbunden wird, ein Luftfilter, eine Batterie und ein Motorlager gehalten wird. Diese starr miteinander verbundenen Konsolen sind aufgrund ihrer Gestaltung, z.B. durch die säulenförmigen Ausformungen an der Stützkonsole, relativ steif in diesem Bereich, so daß nur wenige Lagerungsstellen an den Aufbauträgern erforderlich werden.

Die Stütz- und Aufnahmekonsole ist im Bereich vor einem quer eingebauten Motor benachbart eines frontseitigen Querträgers angeordnet, so daß eine gute Zugänglichkeit für den Luftfilter und die Batterie gewährleistet ist und diese ohne Behinderung nach oben ausbaubar sind.

Durch eine Verlängerung der Grundplatte der Aufnahmekonsole kann gleichzeitig der Lagerort für das Motorlager in einem Trägerteil des Längsträgers verstärkt werden, ohne daß zusätzliche Anbauteile erforderlich sind.

Zur schwingungsisolierten Lagerung des Luftfilters zum Fahrzeugaufbau in der Aufnahmekonsole sind vorzugsweise elastische Lagerelemente einerseits zwischen dem Querträger und dem Tragarm und andererseits zwischen der Stützkonsole und dem Luftfiltergehäuse vorgesehen.

Ein Ausführungsbeispiel der Erfindung ist in der Zeichnung dargestellt und wird im folgenden näher beschrieben.

Es zeigen
Fig. 1 eine Draufsicht auf eine Stütz- und Aufnahmekonsole,
Fig. 2 eine Ansicht in Pfeilrichtung A der Fig. 1 gesehen,
Fig. 3 eine Ansicht in Pfeilrichtung B der Fig. 2 gesehen,
Fig. 4 einen Schnitt nach der Linie IV-IV der Fig. 1, und
Fig. 5 einen Schnitt nach der Linie V-V der Fig. 1.

Die Haltevorrichtung 1 besteht im wesentlichen aus zwei eine Trägereinheit bildenden Konsolen 2 und 3, wobei die Stützkonsole 2 zur Lagerung eines Luftfiltergehäuses 4 und die weitere Aufnahmekonsole 3 zur Lagerung einer Batterie 5 dient.

Die Konsolen 2 und 3 sind starr miteinander verbunden und erstrecken sich etwa in Querrichtung des Fahrzeugs zwischen einem vorderen Aufbauquerträger 6 und einem Antriebsaggregat M.

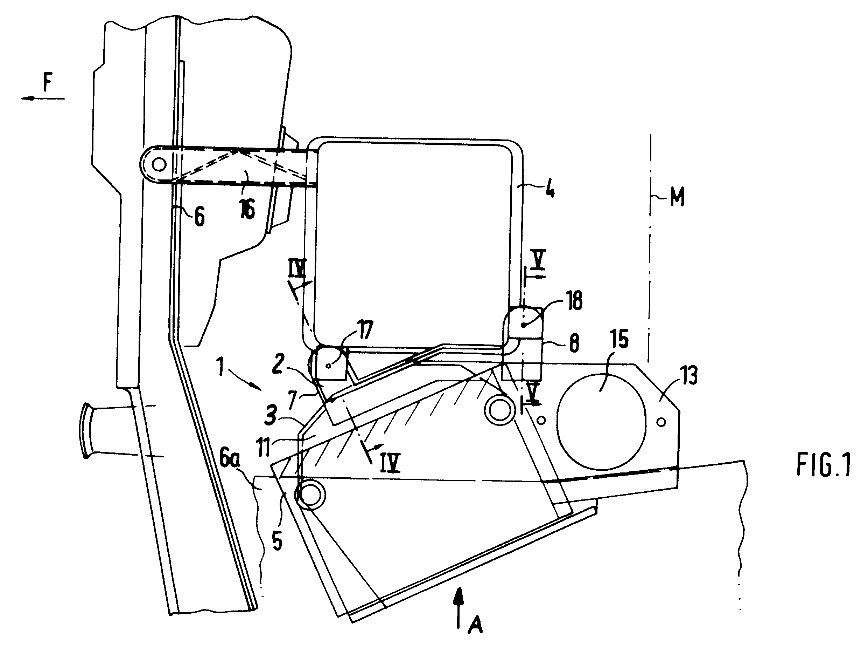

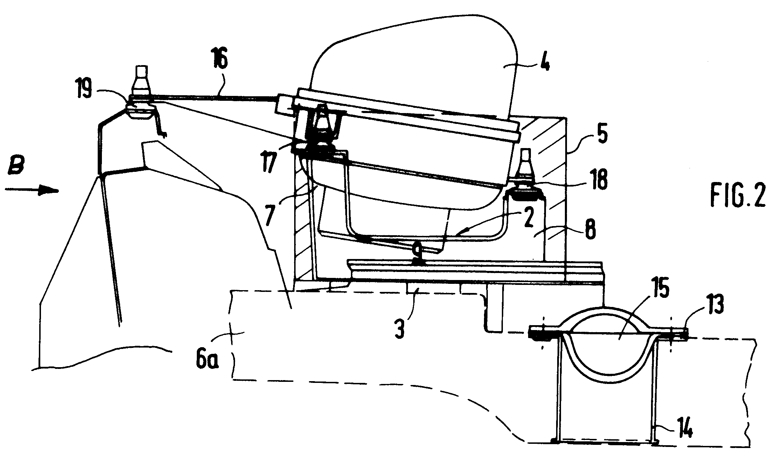

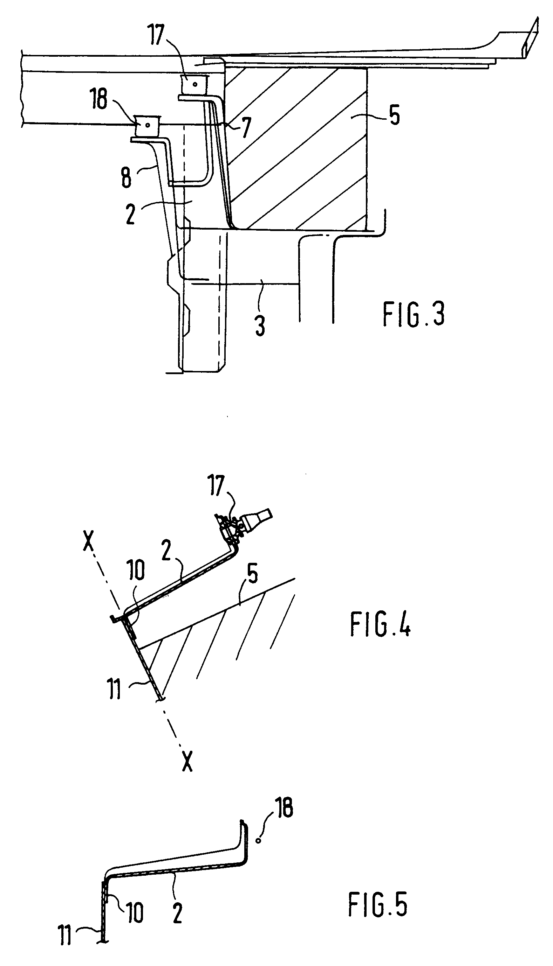

Wie insbesondere in Fig. 2 dargestellt ist, besteht die Stützkonsole 2 aus einem U-förmig ausgebildeten Formteil mit zwei vertikal vorragenden Säulen 7 und 8. Diese sind über eine Blechformrippe 9 miteinander verbunden. An dieser Rippe 9 ist ein horizontal wegführender Steg 10 vorgesehen, welcher sich bis zu den Säulen erstreckt und der mit einer Grundplatte 11 der Aufnahmekonsole 3 derart verschraubt ist, daß die beiden Konsolen 2 und 3 festigkeitsmäßig eine Baueinheit bilden, wie insbesondere auch die Fig. 1, 4 und 5 zeigen.

Die Aufnahmekonsole 3 stützt sich über die Grundplatte 11 an einem in Fahrzeuglängsrichtung verlaufenden Träger 6a ab, der wiederum am Querträger 6 des Fahrzeugaufbaus gehalten ist.

Die Grundplatte 11 ist über die Aufnahmefläche der Batterie 5 hinaus mittels einer versteifenden Grundplatte 13 bis zu einem Trägerelement 14 verlängert, in dem ein Motorlager 15 angeordnet ist. Das Motorlager wird, wie Fig. 2 näher zeigt, durch übergreifende Lagerflansche in einer Öffnung gehalten und durch Schrauben festgesetzt.

Eine weitere Abstützung der Trägereinheit zum Fahrzeugaufbau erfolgt am Querträger 6 über einen Tragarm 16, der am Luftfilter 4 angeformt ist.

Die Lagerung des Luftfiltergehäuses 4 erfolgt über drei elastische Lagerelemente 17, 18 und 19, wobei zwei Lagerelemente 17 und 18 unmittelbar auf den Säulen 7 und 8 der Stützkonsole 2 und das dritte Lagerelement 19 am Querträger 6 vorgesehen ist. Dagegen ist die Trägereinheit, bestehend aus den beiden miteinander verbundenen

2

Konsolen 2 und 3 über das elastische Lagerelement 19 und durch Verbindung der Aufnahmekonsole 3 mit dem Längsträger 6a im Fahrzeugaufbau gehalten.

**Patentansprüche**

1. Haltevorrichtung für ein Antriebsaggregat (M) sowie von Teilen (5) des Aggregats im Fahrzeugaufbau eines Kraftfahrzeugs, wobei die Vorrichtung eine eine Trägereinheit bildende Aufnahmekonsole (3) für eine Batterie (5) umfasst und diese Konsole (3) eine Grundplatte (11) aufweist, die über eine Lagerplatte (13), welche als Haltevorrichtung für ein Aggregatlager (15) ausgebildet sind, an einem Aufbauträger (6a) abgestützt wird, **dadurch gekennzeichnet**, daß mit einer Grundplatte (11) der Aufnahmekonsole (3) mindestens eine aus einem Blechformteil gebildete Stützkonsole (2) starr verbunden ist, die endseitig einen Lagerort (17 oder 18) für ein Luftfiltergehäuse (4) bildet und die Aufnahmekonsole (3) sowie die Stützkonsole (2) zwischen einem - in bezug auf die Fahrtrichtung (F) - vorderen Querträger (6) und dem Antriebsaggregat (M) annähernd nebeneinander in Fahrzeug-Querrichtung angeordnet sind und die Stützkonsole (2) über einen Tragarm (16) mit einem Querträger (6) in die Aufnahmekonsole (3) über die Grund- und Lagerplatten (11, 13) mit einem Längsträger (6a) des Fahrzeugaufbaus verbunden ist.

2. Vorrichtung nach Anspruch 1, **dadurch gekennzeichnet**, daß die Stützkonsole (2) im Verbindungsbereich zur Aufnahmekonsole (3) einen annähernd in einer horizontalen Ebene (X-X) verlaufenden abgewinkelten Steg (10) aufweist, der randseitig mit der Grundplatte (11) der Aufnahmekonsole (3) verbunden ist und an die sich die Lagerplatte (13) verlängernd anschließt.

3. Vorrichtung nach Anspruch 2, **dadurch gekennzeichnet**, daß die Stützkonsole (2) zwei aus der horizontalen Ebene (X-X) der Grundplatte (11) vertikal vorragende Säulen (7 und 8) umfasst, die miteinander über eine Blechformrippe (9) verbunden sind und die stirnseitig Lagerorte für das Luftfiltergehäuse (4) aufweisen.

4. Vorrichtung nach Anspruch 3, **dadurch gekennzeichnet**, daß das Luftfiltergehäuse (4) an den Lagerorten über elastische Lagerelemente (17 und 18) mit der Stützkonsole (2) sowie unter Zwischenschaltung eines dritten elastischen Lagerelements (19) über den Tragarm (16) am Querträger (6) verbunden ist, wobei der Tragarm (16) am Unterteil (4a) des Luftfiltergehäuses (4) angeformt ist.

**Claims**

1. A retaining device for a drive unit (M) and for parts (5) of the unit in the vehicle body of a motor vehicle, wherein the device comprises a receiving bracket (3) - forming a carrier unit - for a battery (5) and the said bracket (3) has a base plate (11) supported on a body carrier (6a) via a bearing plate (13) formed as a retaining device for a unit bearing (15), characterised in that at least one supporting bracket (2), formed from a sheet metal formed part, is rigidly connected to a base plate (11) of the receiving bracket (3), the said supporting bracket (2) forming a bearing point (17 or 18) on the end for an air filter housing (4), and the receiving bracket (3) and the supporting bracket (2) are arranged between - with reference to the direction of travel (F) - a front cross carrier (6) and the drive unit (M) so as to be approximately parallel in the transverse direction of the vehicle, and the supporting bracket (2) is connected via a carrier arm (16) to a cross carrier (6) and the receiving bracket (3) is connected via the base and bearing plates (11, 13) to a longitudinal carrier (6a) of the vehicle body.

2. A device according to claim 1, characterised in that the supporting bracket (2) has, in the region connecting with the receiving bracket (3), an inclined arm (10) extending approximately in a horizontal plane (X-X), the said arm (10) being connected on the edge to the base plate (11) of the receiving bracket (3), to which the bearing plate (13) is connected so as to form an extension.

3. A device according to claim 2, characterised in that the supporting bracket (2) comprises two uprights (7 and 8) projecting vertically from the horizontal plane (X-X) of the base plate (11), the said uprights (7 and 8) being connected to each other via a sheet metal formed rib (9) and having bearing points on the end for the air filter housing (4).

4. A device according to claim 3, characterised in that the air filter housing (4) on the bearing points is connected to the supporting bracket (2) via resilient bearing elements (17 and 18) and, with interposition of a third resilient bearing element (19), to the cross carrier (6) via the carrier arm (16), the carrier arm (16) being formed on the lower part (4a) of the air filter housing (4).

## Revendications

1. Dispositif de fixation d'un groupe moteur (M) ainsi que de parties (5) du groupe dans la carrosserie d'un véhicule automobile, le dispositif comportant une console de logement (3) formant un ensemble de supports pour une batterie (5) et cette console de logement (3) présentant une plaque de base (11) qui prend appui contre un support de carrosserie (6a), par l'intermédiaire d'une plaque d'appui (13), conçue comme un dispositif de fixation d'un appui (15) du groupe, caractérisé en ce qu'au moins une console d'appui (2), formée d'un élément en tôle façonnée, est assemblée rigidement avec une plaque de base (11) de la console de logement (3), laquelle console d'appui forme à une extrémité un point d'appui (17 ou 18) pour un boîtier de filtre à air (4) et en ce que la console de logement (3) ainsi que la console d'appui (2) sont placées entre une traverse (6) avant - dans le sens de la marche (F) - et le groupe moteur (M), à peu près côte à côte dans la direction transversale du véhicule et en ce que la console d'appui (2) est reliée, par un bras de support (16), avec une traverse (6) dans la console de logement (3), par les plaques de base et d'appui (11, 13), avec un longeron (6a) de la carrosserie du véhicule.

2. Dispositif selon la revendication 1, caractérisé en ce que la console d'appui (2) présente, dans la zone d'assemblage avec la console de logement (3), une cloison (10) coudée, s'étendant à peu près dans un plan horizontal (X-X), qui est assemblée sur ses bords avec la plaque de base (11) de la console de logement (3) et qui prolonge la plaque d'appui (13).

3. Dispositif selon la revendication 2, caractérisé en ce que la console d'appui (2) comporte deux montants (7 et 8) dépassant verticalement du plan horizontal (X-X) de la plaque de base (11) et qui sont assemblés entre eux par une moulure (9) de la tôle et qui présentent frontalement des points d'appui pour le boitier du filtre à air (4).

4. Dispositif selon la revendication 3, caractérisé en ce que le boîtier (4) du filtre à air est assemblé aux points d'appui, par des éléments d'appui (17 et 18) élastiques, avec la console d'appui (2) ainsi que par interposition d'un troisième élément d'appui (19) élastique, par le bras de support (16), sur la traverse (6), le bras de support (16) étant formé sur la partie inférieure (4a) du boîtier (4) du filtre à air.

FIG.1

FIG.2

EP 0 348 618 B1

FIG.3

FIG.4

FIG.5